Europäisches Patentamt

European Patent Office

Office européen des brevets

(11) Veröffentlichungsnummer: **0 194 438**

**A1**

(12) # EUROPÄISCHE PATENTANMELDUNG

(21) Anmeldenummer: **86101257.3**

(22) Anmeldetag: **31.01.86**

(51) Int. Cl.⁴: **G 01 D 13/04**

(30) Priorität: **06.03.85 DE 3507867**

(43) Veröffentlichungstag der Anmeldung:
**17.09.86 Patentblatt 86/38**

(84) Benannte Vertragsstaaten:
**DE FR GB IT SE**

(71) Anmelder: **VDO Adolf Schindling AG**
**Gräfstrasse 103**
**D-6000 Frankfurt/Main(DE)**

(72) Erfinder: **Hoehn, Wolfgang**
**Am Kühlen Grund 3**
**D-6237 Liederbach 2(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Anzeigevorrichtung.**

(57) Die Erfindung betrifft eine Anzeigevorrichtung, insbesondere für Kraftfahrzeuge, mit einem transparenten Anzeigefeld 2, auf dem undurchsichtige Zeichen und Symbole darstellbar sind und vor dem ein Zeiger 4 bewegbar ist.

Umgebungslicht ist von der einem Beobachter abgewandten Seite zu der dem Beobachter zugewandten Seite durch das Anzeigefeld 2 hindurchtretbar. Auf der dem Beobachter abgewandten Seite des Anzeigefelds 2 ist eine Hintergrundfläche 6 angeordnet, wobei eine von dem Beobachter ausgehende Projektion des Umrisses des Anzeigefelds 2 auf die Hintergrundfläche 6 kleiner als die Hintergrundfläche 6 aus der Perspektive des Beobachters ist.

VDO Adolf Schindling AG

Gräfstraße 103
6000 Frankfurt/Main
G-R Kl-kmo  / 1818
18. Februar 1985

## Anzeigevorrichtung

Die Erfindung betrifft eine Anzeigevorrichtung, insbesondere für Kraftfahrzeuge, mit einem transparenten Anzeigefeld, auf dem undurchsichtige Zeichen und/oder Symbole darstellbar sind und vor dem ggf. ein Zeiger bewegbar ist, wobei Umgebungslicht von der einem Beobachter abgewandten Seite zu der dem Beobachter zugewandten Seite durch das Anzeigefeld hindurchtretbar ist.

Bei derartigen Anzeigen kommt es durch auf der dem Beobachter abgewandten Seite des Anzeigefelds befindliche Gegenstände, die durch das Anzeigefeld hindurch zusätzlich zu den dargestellten Zeichen und/oder Symbolen sichtbar sind, zu einer schlechten Ablesbarkeit der Anzeigevorrichtung.

Dies ist besonders von Nachteil, wenn das Anzeigefeld am
Armaturenbrett eines Kraftfahrzeugs im direkten Sichtbereich des Fahrers angeordnet ist, da dann der Fahrer während des Fahrbetriebs das Verkehrsgeschehen mit all seinen
Bewegungen als Hintergrund des Anzeigefelds sieht. Um
die Anzeigevorrichtung ablesen zu können, bedarf es dabei
einer intensiven Konzentration. Damit ist der Fahrer aber
längere Zeit mit dem Ablesen der Anzeigevorrichtung beschäftigt, ehe er sich wieder auf das Verkehrsgeschehen
konzentrieren kann. Diese lange Ablenkung ist aber verkehrsgefährdend.

Aufgabe der Erfindung ist es daher, eine Anzeigevorrichtung nach dem Oberbegriff zu schaffen, die leicht und
schnell ablesbar ist. Diese Aufgabe wird erfindungsgemäß
dadurch gelöst, daß auf der dem Beobachter abgewandten
Seite des Anzeigefelds eine Hintergrundfläche angeordnet
ist, wobei eine von dem Beobachter ausgehende Projektion
des Umrisses des Anzeigefelds auf die Hintergrundfläche
annähernd gleich bzw. kleiner als die Hintergrundfläche
aus der Perspektive des Beobachters ist.
Durch diese Ausbildung sieht der Beobachter immer einen
konstanten Hintergrund, dessen gleichmäßig glatte Oberfläche nicht die Ablesbarkeit der am Anzeigefeld dargestellten Zeichen und/oder Symbole beeinträchtigt.

Um den Beobachter störende Spiegelungen an der Hintergrundfläche zu vermeiden, kann diese eine entspiegelte Oberfläche besitzen.

Das Anzeigefeld ist vorzugsweise klar transparent ausgebildet.

Um bewegliche Zeichen und Symbole darstellen zu können,
kann das Anzeigefeld eine transmissive Flüssigkristallanzeige sein.

VDO Adolf Schindling AG

Gräfstraße 103
6000 Frankfurt/Main
G-R Kl-kmo  / 1818
18. Februar 1985

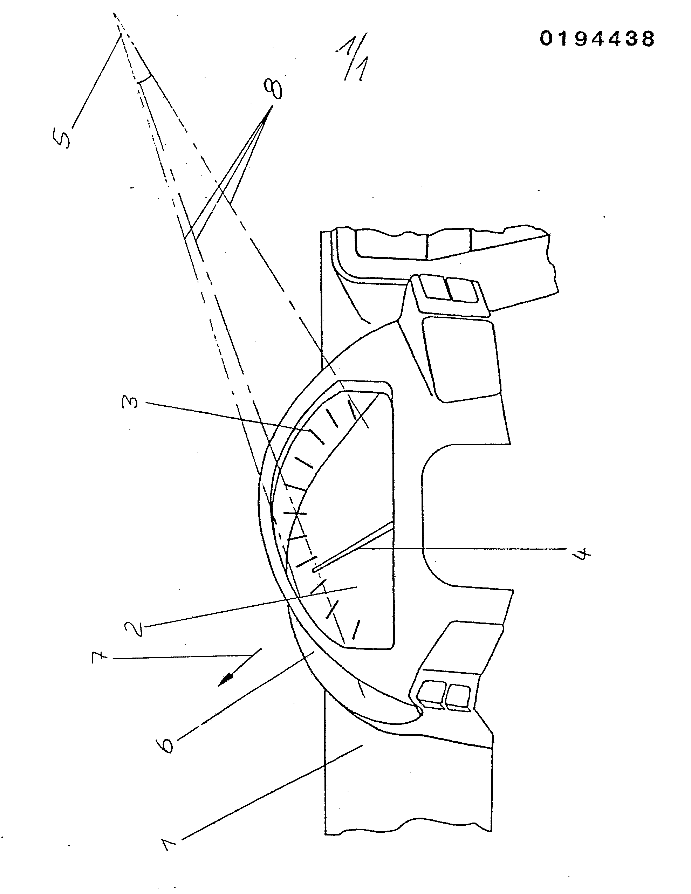

Patentansprüche

1. Anzeigevorrichtung, insbesondere für Kraftfahrzeuge, mit einem transparenten Anzeigefeld, auf dem undurchsichtige Zeichen und/oder Symbole darstellbar sind und vor dem ggf. ein Zeiger bewegbar ist, wobei Umgebungslicht von der einem Beobachter abgewandten Seite zu der dem Beobachter zugewandten Seite durch das Anzeigefeld hindurchtretbar ist, dadurch gekennzeichnet, daß auf der dem Beobachter abgewandten Seite des Anzeigefelds (2) eine Hintergrundfläche (6) angeordnet ist, wobei eine von dem Beobachter ausgehende Projektion des Umrisses des Anzeigefelds (2) auf die Hintergrundfläche (6) annähernd gleich bzw. kleiner als die Hintergrundfläche (6) aus der Perspektive des Beobachters ist.

2. Anzeigevorrichtung nach Anspruch 1, dadurch gekennzeichnet, daß die Hintergrundfläche (6) eine entspiegelte Oberfläche besitzt.

3. Anzeigevorrichtung nach einem der vorhergehenden Ansprüche, dadurch gekennzeichnet, daß das Anzeigefeld (2) klar transparent ausgebildet ist.

4. Anzeigevorrichtung nach einem der vorhergehenden Ansprüche, dadurch gekennzeichnet, daß das Anzeigefeld eine transmissive Flüssigkristallanzeige ist.

5. Anzeigevorrichtung nach einem der vorhergehenden Ansprüche, dadurch gekennzeichnet, daß auf dem Anzeigefeld (2) undurchsichtige Zeichen und/oder Symbole fest angeordnet sind.

6. Anzeigevorrichtung nach einem der vorhergehenden Ansprüche, dadurch gekennzeichnet, daß die Anzeigevorrichtung am Armaturenbrett eines Kraftfahrzeugs im direkten Sichtbereich des Fahrers angeordnet ist.

Sowohl bei einer derartigen Flüssigkristallanzeige als
auch bei einer normalen Zeigeranzeige können auf dem
Anzeigefeld undurchsichtige Zeichen und/oder Symbole
fest angeordnet sein.

Vorzugsweise ist die Anzeigevorrichtung am Armaturenbrett
eines Kraftfahrzeugs im direkten Sichtbereich des Fahrers
angeordnet, wobei die Hintergrundfläche ein integraler Bestandteil der Ablage vor der Windschutzscheibe sein kann.

Da die Position der Augen des Fahrers höher liegt als das
Anzeigefeld der Anzeigevorrichtung kann die Hintergrundfläche etwa ausgehend von der unteren Begrenzung des Anzeigefelds in Fahrtrichtung ansteigend ausgebildet sein.
Das Erscheinungsbild der leichten Konstruktion der Anzeigevorrichtung wird dabei beibehalten.

Ein Ausführungsbeispiel der Erfindung ist in der Zeichnung
dargestellt und wird im folgenden näher beschrieben.
Die einzige Figur der Zeichnung zeigt eine perspektivische
Darstellung einer Anzeigevorrichtung.

Die dargestellte Anzeigevorrichtung ist am Armaturenbrett
1 eines Kraftfahrzeugs im direkten Sichtbereich des Fahrers vor der nicht dargestellten Windschutzscheibe angeordnet. Auf einem klar transparenten Anzeigefeld 2 sind
die undurchsichtigen Skalenstriche einer Skala 3 aufgebracht, vor der ein Zeiger 4 schwenkbar ist. Von der dem
Beobachter abgewandten Seite des Anzeigefelds 2 kann durch
die Windschutzscheibe in das Innere des Kraftfahrzeugs
eintretendes Licht durch das Anzeigefeld 2 hindurchtreten,
so daß die Skala 3 und der Zeiger 4 skelettartig vor hellem Hintergrund erscheinen.

Aus der Position der Augen 5 des Fahrers wird der Hintergrund des Anzeigefelds 2 durch eine Hintergrundfläche 6 gebildet, die ausgehend von der unteren Begrenzung des Anzeigefelds 2 in Fahrtrichtung 7 zur Windschutzscheibe hin ansteigt. Dabei besitzt die Hintergrundfläche 6 eine solche Größe, daß eine von den Augen 5 des Fahrers ausgehende Projektion des Umrisses des Anzeigefelds 2 auf die Hintergrundfläche 6 kleiner ist als die Hintergrundfläche 6 aus der Perspektive des Fahrers gesehen. Diese Projektion ist durch die strichpunktierten Linien 8 dargestellt.

Dadurch, daß die Hintergrundfläche 6 größer ist als die dargestellte Projektion des Umrisses des Anzeigefelds 2, bildet die Hintergrundfläche 6 auch bei Fahrern unterschiedlicher Größe und dadurch bedingter unterschiedlicher Augenhöhe immer einen gleichmäßigen Hintergrund.

Eine Beeinträchtigung durch einen ablenkenden Hintergrund ist somit nicht möglich.

1/1

0194438

Europäisches
Patentamt

# EUROPÄISCHER RECHERCHENBERICHT

## EINSCHLÄGIGE DOKUMENTE

EP 86101257.3

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE - B2 - 2 327 824 (LICENTIA) | 1,3,5 | G 01 D 13/04 |
| A | * Fig.; Spalte 2, Zeilen 44-58 * | 2,4,6 | |
| | ---- | | |

RECHERCHIERTE
SACHGEBIETE (Int Cl 4)

G 01 D 13/00

G 01 R 1/00

G 12 B 11/00

B 60 K 35/00

B 60 K 37/00

B 60 Q 3/00

Der vorliegende Recherchenbericht wurde für alle Patentansprüche erstellt.

| Recherchenort | Abschlußdatum der Recherche | Prüfer |
|---|---|---|
| WIEN | 19-06-1986 | KUNZE |